(19) Europäisches Patentamt
European Patent Office
Office européen des brevets

(11) EP 4 574 556 A1

(12) **EUROPEAN PATENT APPLICATION**

(43) Date of publication:
25.06.2025 Bulletin 2025/26

(21) Application number: 23218448.1

(22) Date of filing: 20.12.2023

(51) International Patent Classification (IPC):
B60L 58/25 (2019.01)    B60L 58/26 (2019.01)

(52) Cooperative Patent Classification (CPC):
B60L 58/25; B60L 58/26; B60L 2240/545;
B60L 2240/549

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Polestar Performance AB
405 31 Göteborg (SE)

(72) Inventors:
• HAGEMAN, Johan Gerard
  411 02 Göteborg (SE)
• KLINTBERG, Anton Björn
  423 63 Torslanda (SE)
• AVRAMOVIC, Marta
  418 76 Göteborg (SE)

(74) Representative: Zacco Sweden AB
P.O. Box 5581
Löjtnantsgatan 21
114 85 Stockholm (SE)

(54) **METHOD AND DEVICE FOR OPERATING A BATTERY CHARGING PROCESS OF AN ELECTRIC VEHICLE**

(57) The present disclosure relates to a method (100) for operating a battery charging process of a battery pack of an electric vehicle, EV, the method comprising obtaining (101) data indicative of system characteristics and operating parameters of the battery pack, determining (102) a control law adapted to, within a charge operating domain, reduce a charging time of said battery pack subject to said data and implementing (103) the control law for operating said battery charging process.

Figure 3

**Description**

TECHNICAL FIELD

The present disclosure relates to a method for operating a battery charging process of a battery pack of an electric vehicle. The present disclosure further relates to a control device for operating a battery charging process of a battery pack and an electric vehicle comprising such a control device. Moreover, the present disclosure relates to a computer-readable storage medium including instructions for performing a method for operating a battery charging process of a battery pack of an electric vehicle.

BACKGROUND

A battery pack in an electric vehicle (EV) serves as the primary energy storage system of the EV. The battery pack provides the necessary power to propel the EV to drive the electric motor therein. The battery pack's capacity and efficiency directly impact the EV's range, acceleration and overall performance.

The battery pack is discharged when electrical energy is drawn from it to power the electric vehicle's motor and other systems thereof. Accordingly, the battery pack needs to be charged periodically.

There exist various battery charging methods used to replenish the energy stored in a battery such as constant voltage charging, constant current charging, etc. A common disadvantage with such conventional charging methods is that they fail to provide sufficient efficiency in the form of time efficiency and/or energy efficiency. Accordingly, the conventional charging methods usually result in an excessive charging time of the battery pack. Specifically, conventional charging methods are often overly generalized which leads to suboptimal outcomes in the charging process of specific battery packs.

Therefore, it would be desirable to provide a method for operating a battery charging process of a battery pack of an electric vehicle that is more efficient compared to the methods of the present art.

Specifically, it would be desirable to provide such a method that provides a more rapid battery charging process of a battery pack of an electric vehicle.

SUMMARY

It is therefore an object of the present disclosure to alleviate at least some of the mentioned drawbacks to provide a method for operating a battery charging process of a battery pack of a vehicle, a control device for operating a battery charging process of a battery pack of an electric vehicle and an electric vehicle comprising such a control device. Further, the present disclosure provides a computer-readable storage medium comprising instructions for performing a method of operating a battery charging process of an electric vehicle.

The present disclosure is at least partly based on the insight that a method for operating a battery charging process which determines a control law adapted to reduce a charging time subject to system characteristics and operating parameters of the battery pack will be more efficient compared to conventional methods.

The present disclosure relates to a method for operating a battery charging process of a battery pack of an EV, the method comprising the steps of obtaining data indicative of system characteristics and operating parameters of the battery pack. System characteristics comprising system states, system states being a present/current temperature and a present/current state of charge (SOC). Operating parameters comprises target SOC, temperature constraints and current constraints. The operating parameters may also in some aspects comprise other factors such as cooling system's operating capacity and limits. Further, the method comprises the step of determining a control law adapted to, within a charge operating domain, reduce a charging time of said battery pack subject to said data. In other words, the method comprises the step of determining a control law adapted to reduce a charging time of said battery pack subject to said data, the control law being determined based on, and/or in accordance with, and/or by utilization of, a charge operating domain. Moreover, the method comprises the step of implementing the control law for operating said battery charging process. The control law may be implemented in a control device of an electric vehicle comprising said battery pack. The control device may be a battery management system (BMS) or an EV charging unit.

An advantage of the method is that it provides a more efficient and rapid charging process as the control law is adapted to reduce charging time of the battery pack while taking present SOC, present temperature, target SOC, temperature and current constraints into account. The method may automatically and effectively reduce the time of the charging process of an electric vehicle in real-time manner.

The term "reduce" may be interchanged with "optimize" or "minimize". The system characteristics may also comprise system dynamics. System dynamics may be a model which indicates the dynamic behaviour of the battery pack over time.

The control law may be implemented in a control device of an electric vehicle comprising said battery pack. The control device may be a battery management system (BMS). The control device may be a charging device. The control device may be a remote device located externally to an electric vehicle. The control device may be a cloud-based device.

Generally, the steps of the method may be computer-implemented. Accordingly, the method may be a computer-implemented method. The method may be performed by a control device of an electric vehicle or the method may be performed by a cloud computing server which further implements the method in a control device of the electric vehicle.

The control law may comprise control data/signals, the control data/signals comprising thermal control values and current control values suitable for jointly reducing a charging time of said battery pack or being adapted to jointly reduce a charging time of said battery pack. Accordingly, the thermal control values and current control values may enable the battery pack to be charged from the present SOC to a target SOC while the battery pack is thermally affected/regulated e.g. cooled.

Some advantages of having a control law that comprises both current control values and thermal control values are that the battery pack is protected against damaging side-reactions, temperature is kept within battery temperature limitations, and the charging session is finished as fast as possible.

Hence, the control law may be determined by providing both cooling signals and current signals that jointly reduce the charging time of the battery pack subject to said data. Usually, heating (temperature rising caused by the charging) of the battery pack is a common issue when charging a battery pack. Hence, as the control law is adapted to reduce the charging time of said battery pack by providing/utilizing both thermal and current control values in conjunction with each other, the charging process can be more rapid compared to conventional solutions while also being more safe. The thermal control values and current control values may be a plurality of values each. Each value may be dedicated to be applied in the battery charging process at a specific point/state of said process such as upon reaching a specific SOC or upon a specific point in time.

The thermal control values may define or be indicative of a temperature of a thermal medium outputted by a thermal device and/or a flow rate of said thermal medium outputted by said thermal device. The thermal medium may be a thermal fluid, e.g., liquid, air. The thermal device may also be referred to as a thermal management system and may comprise one or more of a coolant pump, temperature sensors, a radiator, a heat exchanger, conduits and any other suitable component for circulating the thermal medium.

The charge operating domain may be a discretized charge operating domain comprising a plurality of state values. Each state value of a first set of state values of said plurality of state values is indicative of a specific condition of said battery pack at said present SOC and each state value of a final set of state values different from said first set of state values are indicative of a specific condition of said battery pack at said target SOC. The specific condition may be a specific temperature of said battery pack.

The charge operating domain may further comprise a plurality of intermediate sets of state values, each set being associated with a specific SOC (which may be a SOC range or SOC value) intermediate the target SOC and the present SOC, and each value in each set being indicative of a specific (possible) condition of said battery pack at said specific SOC, such that the plurality of sets of state values define possible conditions the battery pack can have at the specific SOC's when transiting from the present SOC to the final SOC.

An advantage of determining the control law within/based on such a discretized charge operating domain is that the determination of the control law having more computational efficiency, e.g. requiring less computational resources of a control unit/device. The control law may be provided so to optimize conditions of said battery pack during charging and/or upon reaching said target SOC.

The step of determining said control law may comprise determining thermal control values and current control values that (jointly) provide a minimum total transition cost for (a group of) sequential (and preferably consecutive) transitions between one state value of the first set of state values and another state value of said final set of state values, wherein the minimum total transition cost is indicative of a minimized charging time, wherein said determined thermal control values and current control values jointly enable said battery charging process to be executed to achieve said minimum total transition cost. Accordingly, the charge operating domain may be adapted so that the transition costs between said states are indicative of time, hence, the expenses of moving between states are linked to, or reflective of the passage of time. In other words, the input of thermal control values and current control values to the battery pack enables the battery pack to transition between the sequential (adjacent) sets of states. Accordingly, by providing said thermal control values and current control values that minimize the transition cost, the charging time may be minimized.

Advantageously, the determining of the control law will enable the battery pack to, by a combination of thermal control values and current control values, minimize charging time. Accordingly, when the control law is implemented, thermal control values and current control values for each sequential transition may be simultaneously provided/inputted to the battery pack.

In other words, for a change from one state value of one set to another state value of another set, specific current and thermal values may be applied/inputted to the battery pack. Therefore, a specific set of current and thermal values may be provided/determined that enable the transition between the states to result in a minimized charging time subject to said data (specifically current constraints and temperature constraints).

The thermal control values and current control values may be determined iteratively and/or recursively between consecutive state values, (starting) from a state value in the final segment (may be referred to as a final state value) to a state value of the first set (i.e. a first state value) to provide said minimum total transition cost. I.e. starting from the final set. An advantage of recursive backward determining is that computational process is optimized by providing increased efficiency and reduced complexity, which may enable the method to be performed in a control device/unit e.g. an ECU of an electric vehicle or a computational device online.

The step of determining the thermal control values and current control values that provide said minimum total transition cost may be performed by applying dynamic programming. The dynamic programming may be adapted to apply a tabulated and/or bottom-up approach.

Further, the charge operating domain may be defined by utilizing a discretized model, the discretized model is based on a combination/unification of a coulomb counting model/equation and a heat transfer model/equation, said combination replacing/substituting a time variable with a SOC variable, thereby enabling said control law to be provided by a combination of said thermal control values and current control values which, when implemented, reduces said charging time.

In some aspects, the discretized model utilizes the equation:

$$\frac{dT}{dz} = \frac{Q_{nom}}{i \cdot m \cdot c} \cdot (P_{loss} - P_{cool})$$

in which T is a temperature of said battery pack, m is a thermal mass of said battery pack, c is a thermal capacity of said battery pack, $P_{loss}$ is a Joule heating, $P_{cool}$ is a heat removed by a cooling system arranged to cool said battery pack, $Q_{nom}$ is an electrical capacity of said battery pack, z is said SOC variable.

Each aforementioned parameter may be an average value of a plurality of battery cells in each battery pack, e.g., temperature of said battery pack may refer to an average temperature of a plurality of battery cells in the battery pack.

An advantage of the discretized model in accordance with the above is that it defines changes in temperature with respect to the change of SOC of the battery pack (dT, dz) being dependent on current (i) and cooling ($P_{cool}$) input to the battery pack. Accordingly, by providing an optimization problem based on the aforementioned equation, thermal control values and current control values can be provided so that, changes in temperature and SOC of the battery pack provide minimized charging time of the battery pack.

Hence, the control law may be determined by utilizing said discretized model to minimize a transition cost from said target SOC to said present SOC. Thereby, the charging time will be reduced.

Generally, the method herein may be performed in real-time and the operating parameters may therefore be obtained continuously in regular or irregular time-intervals. An advantage of this is that battery aging may be taken into account which gives a more accurate control law. It should be noted that the control law may be derived offline.

The present disclosure further relates to a control device for operating a battery charging process of a battery pack of an electric vehicle the control device being configured to operate the method in accordance with any aspect provided herein.

Further, the present disclosure relates to an electric vehicle comprising such a control device.

Furthermore, the present disclosure relates to a computer-readable storage medium storing one or more programs configured to be executed by a control device, the one or more programs including instructions for performing the method of any aspect herein.

BRIEF DESCRIPTION OF THE DRAWINGS

These and other features and advantages of the present disclosure will now be further clarified and described in more detail, with reference to the appended drawings;

Figure 1    illustrates, in the form of a flowchart, a method for operating a charging process of an EV battery pack;

Figure 2    illustrates a visualized example of a charge operating domain

Figure 3    illustrates a control device of an EV; and

Figure 4    illustrates an EV comprising the control device of Figure 3.

DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "charge operating domain" may refer to conditions/values/parameters within which the battery pack can undergo a charging procedure. The charge operating domain may be based on the system characteristics and operating parameters of the battery pack.

The term "system characteristics" comprises system states of the battery pack such as a temperature of the battery pack at a present time period and a state of charge (SOC) level of the battery pack at a present time period. System characteristics may also comprise additional states of the battery pack.

The term "control law" may be interchanged with "charging protocol".

The term "current constraints" may refer to limits imposed on the flow of electric current within the battery pack and/or a restriction/limit on the amount/amplitude of electric current that can be delivered to the battery pack during charging.

The term "temperature constraints" may refer to predefined limits on operating temperatures of the battery pack that ensure that the battery pack remains within a specified temperature range during charging/discharging.

The term "battery pack" herein may refer to at least one battery cell, or at least one battery module comprising a plurality of battery cells, or a plurality of battery modules. Hence, phrase "the temperature of said battery pack" may refer to an average temperature of a plurality of cells therein or a temperature of each cell/module of the battery pack. Accordingly, the SOC of a battery pack having a plurality of cells may be referred to as an average voltage of all cells compared to a voltage of the fully charged battery pack to calculate the SOC as a percentage.

The term "target SOC" may refer to a desirable SOC when a charging operation is finished. The target SOC may be any SOC, e.g., is usually indicated as 30%, 50%, or 90%. It may be understood that the target SOC may be input/defined by a user of an EV, a control unit, a computer program according to some desired application situation.

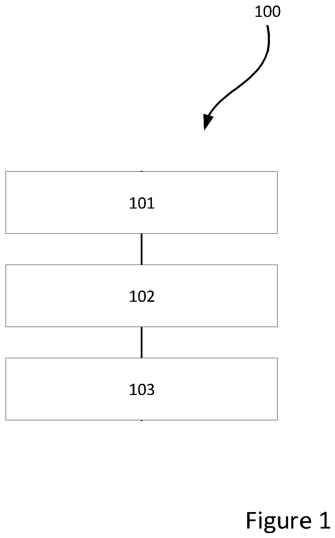

Figure 1 illustrates, in the form of a schematic flowchart, a method 100 for operating a battery charging process of a battery pack of an electric vehicle, EV, the method comprising the steps of obtaining 101 data indicative of system characteristics and operating parameters of the battery pack. The data may be obtained from one or more sensor devices that are configured to monitor said data. Further, system characteristics comprise system states, system states being a present temperature and a present state of charge, SOC. I.e. a temperature and state of charge at a point in time. The operating parameters comprise target SOC, temperature constraints and current constraints. Moreover, the method 100 comprises the step of determining 102 a control law adapted to, within a charge operating domain, reduce a charging time of said battery pack subject to said data and implementing 103 the control law for operating said battery charging process. The implementation 103 may enable the battery pack to be charged in accordance with the control law.

The control law comprises control data, the control data may comprise thermal control values and current control values. The thermal control values and current control values may be a plurality of values that jointly enable the battery pack to be charged in accordance with the control law. In view of any conventional solutions, e.g. charging with the constant voltage method, a plurality of current control values are usually determined to form a control law. However, this imposes some limitations as the current control values need to be chosen e.g. from a predefined value tabulated according to some limitations, so that the battery doesn't get overheated during the charging process, such as by charging with a lower current value which may avoid a temperature rapidly raising, however slowing down the charging process. In comparison, the control law of the present disclosure provides control data that comprises both thermal control values and current control values that may affect the battery charging process in conjunction optimally. In other words, the charging process may be performed during a total time period, wherein the time-period comprises several time-segments for each set, wherein the charging process during each time-segment may be defined by a pair of thermal control values and current control values jointly, e.g. providing a combination of the thermal control values and the current control values. Thereby, enabling the charging process to be more rapid than said conventional charging processes. Hence, determining the control law may comprise determining the thermal control values and current control values, thereby the control law is defined by thermal control values and current control values.

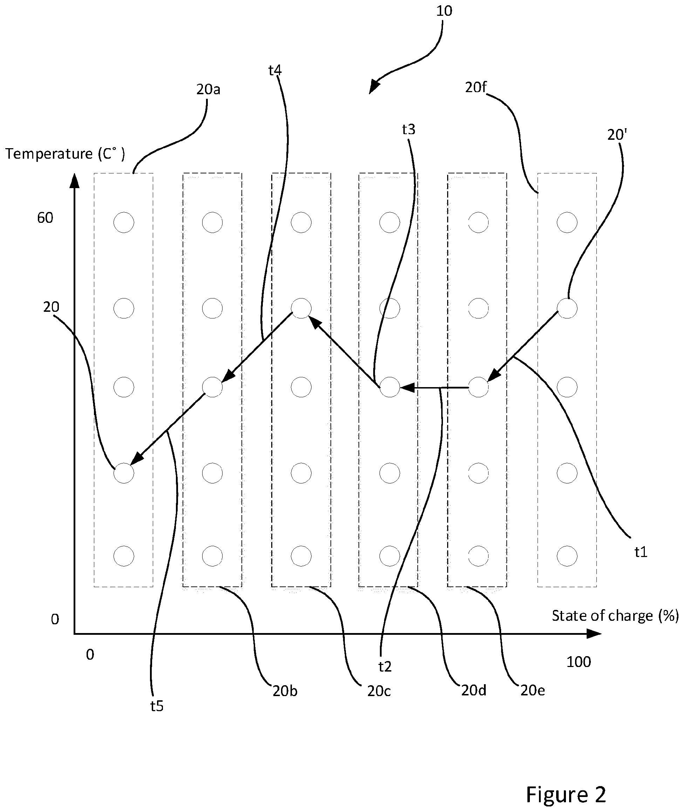

Figure 2 illustrates a graph that depicts a discretized charge operating domain 10 being a discretized charge operating domain comprising a plurality of state values 20, 20'. The discretized charge operating domain may be tabulated as illustrated in Figure 2. Figure 2 illustrates that each state value 20 of a first set of state values 20a of said plurality of state values 20 are indicative of a specific (and/or possible) condition of said battery pack at said present SOC and each state values 20' of a final set 20f of state values of said plurality of state values are indicative of a specific condition of said battery pack at said target SOC. As illustrated in Figure 2 the specific conditions may be a specific temperature.

Hence, as illustrated in Figure 2, the battery pack may have a state indicated by a state value 20. For example, the state value 20 may indicate that the battery pack has a 10% state of charge and a temperature of 30 degrees. Accordingly, the method herein, in the step of determining said control law may comprise determining thermal control values and current control values that (jointly) provide a minimum total transition cost for a group of sequential transitions between one state value 20 of the first set 20a of state values and another state value 20' of said final set 20f of state values.

The charge operating domain 10 of Figure 2 therefore comprises transitions, e.g. t1 to t5 each transition $t_x$ may be referred to as a cost of changing the state of the battery pack. I.e. a state may be a temperature and a state of charge of a battery pack at a specific point in time. In order to transition between adjacent states specific current control values and thermal control values are required to be provided/inputted to the battery pack. The cost of changing the state of the battery pack from a present SOC to a target SOC may be related to a time-variable. Accordingly, the minimum total transition cost for transitioning between a state value associated with a present SOC to a state value associated with a target SOC may be indicative of a minimized charging time.

The thermal control values and current control values may be determined recursively between consecutive state values from the final set to the first set to provide said minimum total transition cost. In Figure 2, the transitions t1 to t5 are performed sequentially starting from the target SOC, such that the minimum total transition cost is determined by a backward approach (Backward Recursion). The backward approach may provide the optimized selection of transition costs.

Figure 2 further illustrates that the charge operating domain may comprise a plurality of intermediate sets 20b-20e of state values, each set 20b-20e being associated with a specific SOC (which may be a SOC range or SOC value) intermediate the target SOC and the present SOC, and each state values 20 in each set being indicative of a specific (possible) condition of said battery pack at said specific SOC, such that the plurality of sets 20a-20f define possible conditions the battery pack can have at specific SOC's when transiting from the present SOC to the final SOC. Accordingly, the plurality of sets 20a-20f may define a sequence of charge segments from a present/initial SOC to a final SOC. Hence, each set 20b-20e may in some aspects be regarded as a charge segment.

Accordingly, the step of determining the thermal control values and current control values that provide said minimum total transition cost may be performed by applying dynamic programming. Hence, referring to the graph of Figure 2, six pairs of thermal control values and current control values may be provided to enable the battery pack to transition from state with reference numeral 20 (a initial/present state value) (in set 20a) to state with reference numeral 20' (a final state value in state 20f), e.g. representing charging from approximately 10% SOC to approximately 100% SOC. As illustrated by the five arrows in Figure 2, there are five transitions t1-t5 performed so that there are transitions t1-t5 from a state value from set: 20f -> 20e -> 20d -> 20c ->20b -> 20a. The arrows point "backward" to refer to that backward dynamic programming have been performed to find the optimal path with provides the minimum transition cost. Figure 2 illustrates that the transitions t1-t5 are consecutive. Hence for each transition thermal control values and current control values need to be provided such as shown in the example table below:

| Transition 1 (t1) | Transition 2 (t2) | Transition 3 (t3) | Transition 4 (t4) | Transition 5 (t5) |
|---|---|---|---|---|
| Current value i1 | Current value i2 | Current value i3 | Current value i4 | Current value is |

(continued)

| Transition 1 (t1) | Transition 2 (t2) | Transition 3 (t3) | Transition 4 (t4) | Transition 5 (t5) |
|---|---|---|---|---|
| Thermal value p1 | Thermal value p2 | Thermal value p3 | Thermal value p4 | Thermal value p5 |

Each value may be provided as a function of time such that e.g., a current i1 and cooling p1, is simultaneously provided for x minutes to provide p5 in the table above. Accordingly, in order to charge an electric vehicle, firstly current and thermal values 5 (i5, p5) need to jointly be provided for a specific amount of time to enable transition t5. In aspects, the method may during the step of implementing comprise providing each pair of values (e.g. current/thermal values i5, p5) until determined that the transition associated with said values is performed (e.g.. when determined that the SOC of the battery pack of the vehicle has changed from approximately 10%-20%), subsequently the method may provide current and thermal control values to enable the next/consecutive transition (which in this case would be to provide current/thermal values i4, p4), the method may perform this until the SOC has changed to said target SOC. The transitions t1-t5 as illustrated in Figure 2 may be the specific path that provides said minimized charging time.

It should be noted that in order to arrive to the optimal transition providing said minimized transition cost, the method may calculate for any combination of state values iteratively and/or recursively until said thermal control values and current control values are identified that provide the minimal transition cost (which is shown in Figure 2). Hence, a plurality of iterations/recursions may be performed to identify the optimal path for transition from a current SOC to a target SOC and a minimized sum of costs is guaranteed. The charge operating domain may be defined by utilizing a discretized model such as one being based on the one illustrated in Figure 2, the discretized model being based on a combination of a coulomb counting model and a heat transfer model, said combination replacing a time variable with a SOC variable, thereby enabling said control law to be provided by a combination of said thermal control values and current control values which, when implemented, minimize said charging time.

Specifically, the discretized model may utilize a heat transfer model expressed as:

$$\frac{dT}{dt} = \frac{1}{m \cdot c} \cdot (P_{loss} - P_{cool}), \quad (1)$$

Further, a coulomb counting equation in derivative form may be expressed as

$$\frac{dz}{dt} = \frac{i}{Q_{nom}}, \quad (2)$$

Moreover, using (2) for changing variables from time to SOC in (1), to combine (1) and (2) gives:

$$\frac{dT}{dz} = \frac{Q_{nom}}{i \cdot m \cdot c} \cdot (P_{loss} - P_{cool}). \quad (3)$$

In other words, the time variable is replaced with a SOC variable.
Discretizing (3) using forward Euler gives:

$$T(k+1) = T(k) + \frac{\Delta z \cdot Q_{nom}}{i \cdot m \cdot c} \cdot (P_{loss}(k) - P_{cool}(k)),$$

Wherein $\Delta z$ is a change of SOC. Hence, by formulating an optimization problem based on (3), the transition from a current SOC to a target SOC can be cost-minimized, by formulation of an optimization problem, which will provide current control and thermal control values that jointly allow the battery pack to be transitioned from the current SOC to a target SOC with a minimized charging time.

T is a temperature of said battery pack, m is a thermal mass of said battery pack, c is a thermal capacity of said battery pack, $P_{loss}$ is a Joule heating, $P_{cool}$ is a heat removed by a cooling system arranged to cool said battery pack, $Q_{nom}$ is an electrical capacity of said battery pack, z is said SOC variable.

Hence, the control law may be determined by utilizing said discretized model to minimize a transition cost from said target SOC to said present SOC.

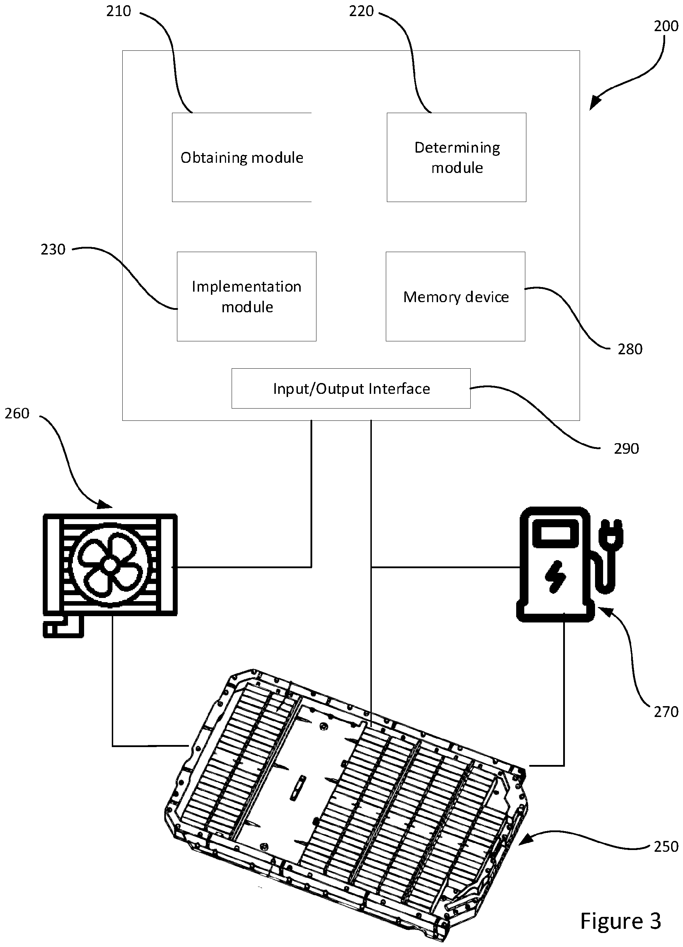

Figure 3 schematically illustrates a control device 200 for operating a battery charging process of a battery pack 250 of an electric vehicle. The control device 200 being configured to obtain data indicative of system characteristics and operating parameters of the battery pack. The data may be obtained in an obtaining module 210 of the control device. The data may be obtained from one or more sensor device. The control device 200 may further be configured to determine a control law adapted to, within a charge operating domain, reduce a charging time of said battery pack subject to said data and implement the control law for operating said battery charging process. The control law may be determined in a determining module 220 of said control device 200 and the control device 200 may further comprise an implementation module 230 for implementing the control law. Hence, the implementation module 230 may transmit relevant signals to a cooling device 260 and the battery pack 250 and /or a charging station 270 connected to the battery pack 250 for enabling the control law to be implemented. The term "control device" may be a computing device, a device of a vehicle, a battery management system and/or a charging management device.

As illustrated in Figure 3, the control device 200 may comprise one or more memory devices 280. The memory device 280 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 210, 220, 230, 290. Each memory device 280 may store any suitable instructions, data or information, including a computer program, software, an application including one or more of logic, rules, code, tables, etc. and/or other instructions capable of being executed by modules 210, 220, 230, 290 and, utilized. Specifically, the memory device may store a charge operating domain for providing said control law. Hence, the determining module 220 may utilize said framework. Memory device 280 may be used to store any calculations made by determining module 220 and/or any data received via output and input interface 290. The memory device 280 may store any instructions and/or programs that may carry out the method of providing a control law according to the disclosure herein. The instructions may be executed by the control device 200. The instructions may comprise instructions for implementing the control law according to any aspect of the present disclosure. Generally, it may comprise instructions to perform any of the steps 101-103 in the method 100 as illustrated in figure 1.

In some embodiments, the memory device 280 may be considered to be integrated in one or more of the modules. In some embodiments, the memory device 280 and related data are stored in a cloud server accessible by the control device 200.

The modules 210, 220, 230 may comprise, for example, one or more central processing units (CPUs), graphics processing units (GPUs) dedicated to performing calculations, and/or other processing devices.

The communication between modules, battery pack, charging station and cooling device may be performed by any type of communication network, such as a local area network (e.g. intranet), wide area network (e.g. Internet), cellular network, or some combination thereof.

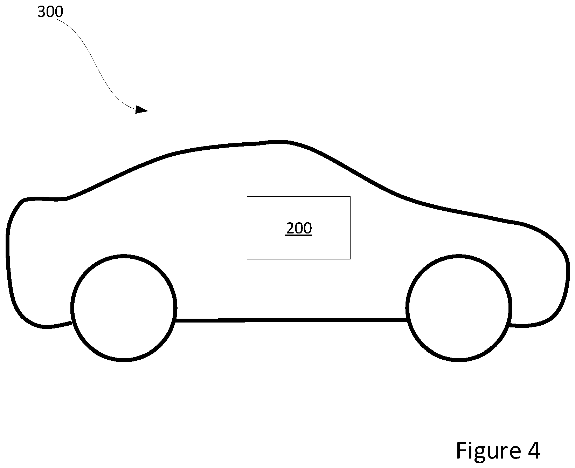

Figure 4 schematically illustrates an electric vehicle 300 which may comprise the control device 200 of Figure 3. Further, the electric vehicle 300, as may be appreciated by a skilled person in the art comprise a battery pack as illustrated in Figure 3, and a number of other electrical components, including an electrical current transmission system, safety system, battery management system, current management system, and a battery busbar interconnecting the various components. Further, the electric vehicle may comprise an electronic control unit (ECU) in order to control an electric motor. The ECU or components thereof can comprise or include various modules, each of which is constructed, programmed, configured, or otherwise adapted to autonomously carry out a function or set of functions.

**Claims**

1.   A method (100) for operating a battery charging process of a battery pack of an electric vehicle, EV, the method comprising:

 - obtaining (101) data indicative of system characteristics and operating parameters of the battery pack,

   wherein system characteristics comprise system states, system states being a present temperature and a present state of charge, SOC,
   wherein operating parameters comprise target SOC, temperature constraints and current constraints;

 - determining (102) a control law adapted to, within a charge operating domain, reduce a charging time of said battery pack subject to said data;
 - implementing (103) the control law for operating said battery charging process.

2.   The method (100) according to claim 1, wherein the control law comprises control data, the control data comprising thermal control values and current control values.

3. The method (100) according to claim 2, wherein said thermal control values define a temperature of a thermal medium outputted by a thermal device and/or a flow rate of said thermal medium outputted by said thermal device.

4. The method (100) according to any one of the claims 1-3, wherein said charge operating domain is a discretized charge operating domain comprising a plurality of state values,

   wherein each state value of a first set of state values of said plurality of state values are indicative of a specific condition of said battery pack at said present SOC; and
   each state values of a final set of state values of said plurality of state values are indicative of a specific condition of said battery pack at said target SOC.

5. The method (100) according to claim 4, wherein said specific conditions is specific temperatures.

6. The method (100) according to any one of the claims 4 or 5 wherein the step of determining (102) said control law comprises:

   - determining thermal control values and current control values that provide a minimum total transition cost for a sequential transition between one state value of the first set of state values and another state value of said final set of state values, wherein the minimum total transition cost is indicative of a minimized charging time, wherein said determined thermal control values and current control values jointly enable said battery charging process to be executed to achieve said minimum total transition cost.

7. The method (100) according to claim 6, wherein the thermal control values and current control values are determined recursively between consecutive state values from the another state value of said final set to the state value of said first set to provide said minimum total transition cost.

8. The method (100) according to claim 6 or 7, wherein the step of determining (102) the thermal control values and current control values that provide said minimum total transition cost is performed by applying dynamic programming.

9. The method (100) according to any one of the preceding claims 2-8, wherein said charge operating domain is defined by utilizing a discretized model, the discretized model being based on a combination of a coulomb counting model and a heat transfer model, said combination replacing a time variable with a SOC variable, thereby enabling said control law to be provided by a combination of said thermal control values and current control values which, when implemented, reduces said charging time.

10. The method (100) according to claim 9, wherein the discretized model utilizes the equation:

$$\frac{dT}{dz} = \frac{Q_{nom}}{i \cdot m \cdot c} \cdot (P_{loss} - P_{cool})$$

   in which T is a temperature of said battery pack, m is a thermal mass of said battery pack, c is a thermal capacity of said battery pack, $P_{loss}$ is a Joule heating, $P_{cool}$ is a heat removed by a cooling system arranged to cool said battery pack, $Q_{nom}$ is an electrical capacity of said battery pack, z is said SOC variable.

11. The method (100) according to claim 9 or 10, wherein the control law is determined by utilizing said discretized model to minimize a transition cost from said target SOC to said present SOC.

12. The method (100) according to claim 11, wherein the control law is determined by resolving an optimization problem based on said discretized model to minimize a transition cost from said target SOC to said present SOC.

13. A control device (200) for operating a battery charging process of a battery pack (250) of an electric vehicle (300) the control device (200) being configured to operate the method (100) in accordance with any one of the claims 1-12.

14. An electric vehicle (300) comprising the control device (200) according to claim 13.

15. A computer-readable storage medium storing one or more programs configured to be executed by control device (200), the one or more programs including instructions for performing the method (100) of any of claims 1-12.

100

101

102

103

Figure 1

Figure 2

Figure 3

300

200

Figure 4

| | Europäisches Patentamt European Patent Office Office européen des brevets | **EUROPEAN SEARCH REPORT** | **Application Number** EP 23 21 8448 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2020/231060 A1 (MATSUYAMA YOSHIO [JP] ET AL) 23 July 2020 (2020-07-23)<br>* paragraph [0002] - paragraph [0131]; figures 2,7,8,9 *<br>- - - - - | 1-5,9, 13-15<br>6-8, 10-12 | INV.<br>B60L58/25<br>B60L58/26 |
| X | US 2013/300361 A1 (ORIGUCHI MASATO [FR] ET AL) 14 November 2013 (2013-11-14)<br>* paragraph [0001] - paragraph [0076] *<br>- - - - - | 1-15 | |

TECHNICAL FIELDS
SEARCHED (IPC)

B60L

The present search report has been drawn up for all claims

| Place of search | Date of completion of the search | Examiner |
|---|---|---|
| The Hague | 14 May 2024 | Cuk, Vladimir |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 8448

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | Publication date | Patent family member(s) | | Publication date |
|---|---|---|---|---|
| US 2020231060 A1 | 23-07-2020 | CN | 111439166 A | 24-07-2020 |
| | | EP | 3683084 A1 | 22-07-2020 |
| | | JP | 7163785 B2 | 01-11-2022 |
| | | JP | 2020115715 A | 30-07-2020 |
| | | US | 2020231060 A1 | 23-07-2020 |
| US 2013300361 A1 | 14-11-2013 | CN | 103299474 A | 11-09-2013 |
| | | EP | 2636093 A1 | 11-09-2013 |
| | | FR | 2967303 A1 | 11-05-2012 |
| | | JP | 5931892 B2 | 08-06-2016 |
| | | JP | 2013543366 A | 28-11-2013 |
| | | US | 2013300361 A1 | 14-11-2013 |
| | | WO | 2012059551 A1 | 10-05-2012 |

EPO FORM P0459

For more details about this annex : see Official Journal of the European Patent Office, No. 12/82